# EUROPEAN PATENT APPLICATION

(11) **EP 3 929 621 A1**
(43) Date of publication of application: **29.12.2021**
(21) Application number: 20382541.9
(22) Date of filing: 22.06.2020
(51) Int. Cl.: G01S 13/04, G01S 13/56, G01V 3/10, G01V 3/12, G01V 3/165, G01V 3/15, G01V 3/28

(54) **A SAFETY DISTANCE DEVICE**

(71) Applicant: Premo, S.A., 29590 Campanillas Málaga (ES)
(72) Inventor: NAVARRO PÉREZ, Francisco Ezequiel, 08006 Barcelona (ES); CAÑETE CABEZA, Claudio, 29631 Benalmádena (ES); ROJAS CUEVAS, Antonio, 29190 Málaga (ES); ESKILDSEN, Jørn, DK-7160 Tørring (DK); KIERSTEIN, Lau Kofoed, DK-7100 Vejle (DK)
(74) Representative: Juncosa Miró, Jaime

(57) **Abstract**

A safety distance device is proposed. The safety distance device (1) comprises a power source; a detection mechanism (100); a warning mechanism (300); and a processing unit (200) operatively connected to the detection mechanism (100) and the warning mechanism (300). The detection mechanism (100) is configured to detect when the safety distance device (1) is within a configurable threshold distance of at least one object, said threshold distance being configured and indicated by the processing unit (200), and the warning mechanism (300) is configured to provide a warning signal when the detection mechanism (100) has detected that the safety distance device (1) is within the threshold distance. The detection mechanism (100) comprises a receiver sensor (101) and a transmitter unit (103), wherein the receiver sensor (101) includes low frequency magnetic inductors arranged in three axes and the transmitter unit (103) includes at least one low frequency magnetic inductor.

## Description

### Technical Field

The present invention relates to a smart safety distance device, in particular a wearable device, to warn/alert a user/wearer when (s)he is within a threshold security distance (e.g. 1.5 - 2 meters) from another safety distance device or from an energized equipment.

The safety distance device can be used in working environments, especially industrial, but also in essential public spaces such as schools, beaches, sports facilities, etc., for monitoring, measuring and warning users of the distance to others (Social Distance Warning) or to other equipment requiring security protection, for example energized equipment located in medium- and high-voltage electrical installations.

The proposed safety distance device implements a technology called bi-directional low-frequency (20 kHz-150 kHz and 13.56 MHz) magnetic induction, which is a robust technology and allows a stable adjustable ultra-short range (<2m) and a high precision communication link creating minimum electromagnetic interferences and producing no adverse effects on the wearer's human body.

### Background of the Invention

There are known some devices/systems for safety distance warning; however, the known solutions are mainly based or use:
- Smartphones with GPS, BTLE, WIFI, therefore not maintaining confidentiality of the user;
- Tags with UWB, BTLE, High Frequency or Ultra-High Frequency;
- Combination of tags and Smartphones using GPS/BTLE;
- Floor sensors;
- Machine vision cameras; and/or
- Light barriers (IR/Laser).

Other more recent devices for safe-distance monitoring, in particular for preventing risky contact during pandemic diseases, for example during Covid-19, use Bluetooth or similar technology as detection mechanisms. The radio signals emitted with such technologies (about 2.4 GHz) are absorbed by the human body which makes a robust, efficient, low power and reliable solution unfeasible.

New safety distance devices, more reliable, safer and with low-consumption, are therefore needed.

### Description of the Invention

An object of the present invention is thus to provide a device for safe-distance monitoring (i.e. a safety distance device, e.g. a wearable device, among others). This object is fulfilled by the device with the characteristics of claim 1.

In an embodiment, the safety distance device comprises, as known in the field: a power source; a detection mechanism; a warning mechanism; a processing unit operatively connected to the detection mechanism and the warning mechanism; where the detection mechanism is configured to detect when the safety distance device is within a configurable threshold distance (e.g. 1-2 meters) of at least one object (for example another safety distance device or an energized equipment), said threshold distance being configured and indicated by the processing unit; and where the warning mechanism is configured to provide a warning signal when the detection mechanism has detected that the safety distance device is within the threshold distance.

Unlike the known proposals in the field, in the proposed safety distance device the detection mechanism comprises a receiver sensor and a transmitter unit; the receiver sensor includes low frequency magnetic inductors arranged in three axes (i.e. a tri-axial magnetic inductor) and the transmitter unit includes at least one low frequency magnetic inductor.

Therefore, the proposed safety distance device is an scalable out-of-the-box solution, robust to harsh, industrial and radio-noisy environments, and compatible with other computer devices such as Smartphones, that implements a communication in both directions (i.e. it provides a full bidirectional low-frequency solution), and so is able to transmit and receive energy (very short range <2m) with very high precision. Moreover, because of the use of the low-frequency full bidirectional radio communication, no rebounds or false signals are present.

In an embodiment, the low frequency tri-axial magnetic inductor comprises a magnetic core and three windings of electro-conductive wire, arranged orthogonally and wound around the magnetic core.

In an embodiment, the at least one low frequency magnetic inductor of the transmitter unit comprises an elongated magnetic core and a coil wound around the elongated magnetic core. Alternatively, in other embodiments, the at least one low frequency magnetic inductor of the transmitter unit can comprise a square, rectangular or round coil of electro-conductive wire with a given number of turns. In yet other embodiments, the transmitter unit comprises two elongated, low frequency, orthogonal magnetic inductors with or without a magnetic core.

The safety distance device can be integrated in a wrist-worn band/box, in a necklace, a badge or in a belt, among others. In some embodiments, the safety distance device can be integrated into a Smartphone. In this later case, the transmitter unit includes a low frequency magnetic inductor, without magnetic core, that surrounds at least part of the borders of the Smartphone.

In an embodiment, the detection mechanism further has a first ultra-low noise and/or power signal amplifier module, operatively connected to the receiver sensor and the processing unit, to amplify the signal(s) received by the low frequency tri-axial magnetic inductor; and a second signal and/or power amplifier module, operatively connected to the transmitter unit and the processing unit, to amplify the signal(s) emitted by the processing unit.

The low frequency magnetic inductor/s of the transmitter unit can be configured to transmit the signal(s) emitted by the processing unit every certain configurable period of time, for example during 10-100ms, every 500-1000ms.

In some embodiments, the processing unit also includes an Analog-Digital converter, a calibration unit, and a multiplexor. As the strength signal received by each of the magnetic inductors of the receiver sensor can be different (depending on the particular arrangement of the triaxial magnetic inductor when detecting/receiving the signal(s)) the multiplexor will combine the signal(s), once digitized and calibrated, into a single stream of data.

In yet some embodiments, the processing unit can also include a modulator/demodulator mechanism to assist in the emission of the signal(s).

The warning mechanism can comprise a sound device, a vibrating device, a lighting device, or combinations thereof.

In an embodiment, the power source comprises at least one rechargeable battery.

### Brief Description of the Drawings

The previous and other advantages and features will be more fully understood from the following detailed description of embodiments, with reference to the attached figures, which must be considered in an illustrative and non-limiting manner, in which:
Fig. 1 is a block diagram that schematically illustrates the architecture of a safety distance device for safety distance, according to an embodiment of the present invention.
Fig. 2 illustrates an embodiment of the down-link channel elements for the reception of signals.
Fig. 3 illustrates an embodiment of the up-link channel elements for the transmission of signals.

### Detailed Description of Preferred Embodiments

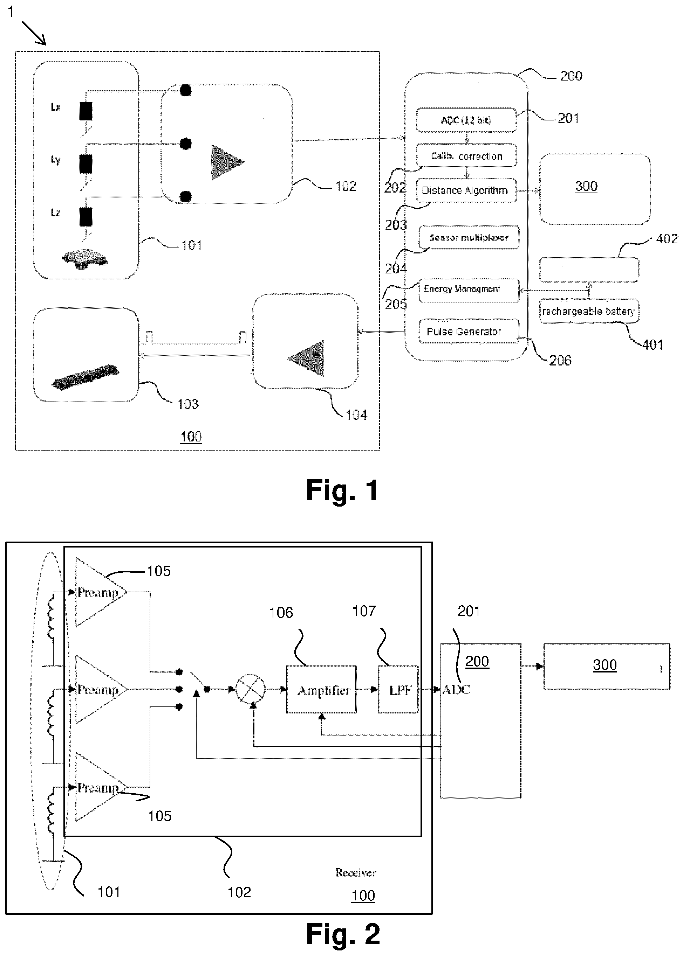

With reference to Fig. 1, therein an embodiment of the architecture of the smart safety distance device 1 is illustrated. The safety distance device 1 provides a simple, reliable, light, low power consumption and affordable technology/solution to allow maintaining a security distance.

According to the embodiment disclosed in Fig. 1, the safety distance device 1 comprises a detection mechanism 100 constituted by a receiver sensor 101, an ultra-low noise and/or power signal amplifier module 102, a transmitter unit 103 and a signal and/or power amplifier module 104; a processing unit 200; a warning mechanism 300; and a battery 401 rechargeable via a charging port 402.

The receiver sensor 101 of the detection mechanism 100 detects in cooperation with the processing unit 200 when the safety distance device 1 is within a configurable threshold distance (for example 1- 2 meters) of one or more objects such as another safety distance device or even an energized equipment that requires security protection. The warning mechanism 300 vibrates and/or provides a light notification when the safety distance device 1 is within said threshold distance. Therefore, the user/wearer of the safety distance device 1 is reminded of the need to keep the security distance.

In the embodiment of Fig. 1, the receiver sensor 101 is formed by a low frequency tri-axial magnetic inductor that comprises a magnetic core and three windings of electro-conductive wire, arranged orthogonally and wound around the magnetic core. Such arrangement of three inductors distributed in three orthogonal directions is highly effective in capturing any nearby magnetic field with incidence in any direction.

The transmitter unit 103 can be formed by one or more low frequency magnetic inductors. For example, the transmitter unit 103 can be formed by a magnetic inductor having an elongated magnetic core and a coil wound around the elongated magnetic core. In other embodiments, the transmitter unit 103 can be formed by a low frequency magnetic inductor having a square, rectangular or round coil of electro-conductive wire with a given number of turns. The transmitter unit 103 in other embodiments can be formed by two elongated, low frequency, orthogonal magnetic inductors having or not a magnetic core. In this case, the two magnetic inductors can be arranged in a 90º configuration. The processing unit can further characterize and generate an additional 'virtual' axis over the two magnetic inductors so an isotropic detection algorithm (3D) can be used. This "virtual" axis is built based on the information of the existing hardware.

In yet another embodiment, the transmitter unit 103 can be formed by a low frequency magnetic inductor having no magnetic core. In this case, the low frequency magnetic inductor can be disposed around the periphery/borders of a portable computing device, for example a Smartphone. The Smartphone will further integrate the above-explained low frequency tri-axial magnetic inductor (as disclosed in WO2019105710 and EP 19382311 of the same applicant of present invention) and the electronic and processing components.

For the embodiments in which the transmitter unit 103 is formed by a single low frequency magnetic inductor, i.e. a single axis coil, the safety distance device 1 can further include an Inertial Measurement Unit (IMU) and a magnetometer configured to operate coordinatively. IMU and magnetometer information will be sent from the transmitting unit 103 over the LF link to another safety distance device 1. The IMU and magnetometer information is combined with the receiver's own IMU and magnetometer information in order to do a full 3D distance calculation based on only one single axis transmitter. With this arrangement of components enough accuracy can be assured without the need of a second axis coil in the transmitter unit 103, also providing a significate energy saving.

Referring back to Fig. 1, for the down-link channel, the processing unit 200 includes an Analog to Digital converter 201 to convert the analog signal(s) detected by the low frequency magnetic inductors of the receiver sensor 101 into a digital signal; a calibration unit 202 to correct the later; and a multiplexor 204 which aggregates the digitized and corrected signals into a single bit stream of data that will be used to check if the safety distance device 1 maintains the security distance.

On the other hand, the processing unit 200, for the up-link channel, includes a pulse generator 206, for example of a frequency of 125 kHz. The low frequency magnetic inductor/s of the transmitter unit 103 can transmit these signal(s) every certain configurable period of time, for example every 10-100 ms, depending on how the signal and/or power amplifier module 104 is configured.

With reference now to Fig. 2, therein an embodiment of the down-link channel for the reception of the signals from another safety distance device or energized equipment that requires security protection is illustrated. In this embodiment, the ultra-low noise and/or power signal amplifier module 102 comprises one pre-amplifier 105 for the pre-amplification of the signals received by each low frequency magnetic inductor of the receiver sensor 101. The ultra-low noise and/or power signal amplifier module 102 also includes an amplifier device/element 106 and a low-pass filter 107 for amplifying and attenuating, respectively, the received signals before reaching the Analog to Digital converter 201 connected to the warning mechanism 300.

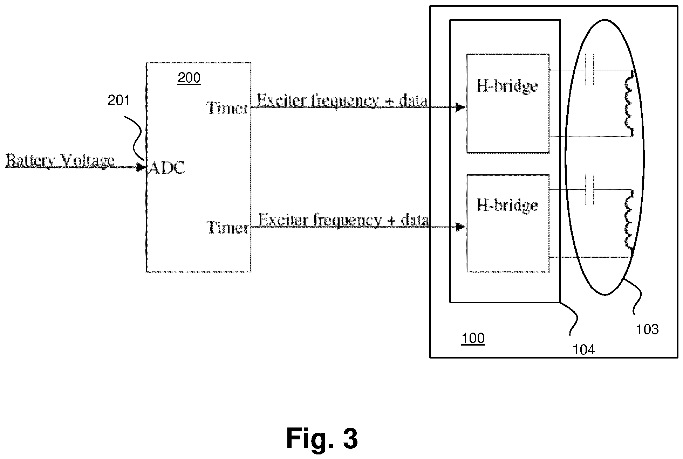

Fig. 3 illustrates an embodiment of the uplink-channel for the transmission of the signals to another safety distance device or energized equipment. In this embodiment, the power amplifier module 104 comprises or it is implemented as two H-bridges (one for each elongated magnetic core assuming two of them, orthogonal, are used). The data (i.e. the signals) are transmitted by means of frequency modulation of the carrier.

The safety distance device 1 comprises or has a unique device identifier for identification thereof. The unique device identifier is ideally suited for use as serial number (for example USB string serial numbers or other applications); for use as part of security keys in order to increase the security code in a memory of the processing unit 200 while using and combining the unique device identifier with software cryptographic primitives and protocols before programming said memory; to activate secure boot processes, etc.

In some embodiments, the unique device identifier is implemented as a 96-bit long unique identifier. These bits cannot be altered by the user of the safety distance device 1.

In some embodiments, the processing unit 200 keeps record of the interactions of the safety distance device 1 with other safety distance devices. To do so, the unique device identifiers of the safety distance devices in range are exchanged based on either a truncated version of the unique device identifiers or the identifiers as programmed at production time. If traceability is needed, then these unique device identifiers are linked to the physical users/wearers in a secure database system. In any case, the traceability is done maintaining the anonymity of the user/wearer at all times. Therefore, all the interactions the safety distance device 1 has been subjected to can be recorded and further traced. The present invention can also develop mapping capabilities that will show where said interactions are taking place.

In yet some embodiments, the processing unit 200 can monitor and/or record the time the safety distance device 1 has been below the configurable threshold safety distance.

Those skilled in the art will recognize that the present teachings are amenable to a variety of modifications and/or enhancements. For example, although the implementation of various components described herein may be embodied in a hardware device, it may also be implemented as a software only solution-e.g., an installation on an existing server. In addition, the processing as disclosed herein may be implemented as a firmware, firmware/software combination, firmware/hardware combination, or a hardware/firmware/software combination.

The present disclosure and/or some other examples have been described in the above. According to descriptions above, various alterations may be achieved. All applications, modifications and alterations required to be protected in the claims may be within the protection scope of the present disclosure.

The scope of the present invention is defined in the following set of claims.

## Claims

1. A safety distance device, comprising:
a power source ;
a detection mechanism (100);
a warning mechanism (300);
a processing unit (200) operatively connected to the detection mechanism (100) and the warning mechanism (300);
the detection mechanism (100) is configured to detect when the safety distance device (1) is within a configurable threshold distance of at least one object, said threshold distance being configured and indicated by the processing unit (200); and
the warning mechanism (300) is configured to provide a warning signal when the detection mechanism (100) has detected that the safety distance device (1) is within the threshold distance;
**characterized in that** the detection mechanism (100) comprises a receiver sensor (101) and a transmitter unit (103), wherein the receiver sensor (101) includes low frequency magnetic inductors arranged in three axes and the transmitter unit (103) includes at least one low frequency magnetic inductor.

2. The device of claim 1, wherein the low frequency magnetic inductors arranged in three axes comprises a magnetic core and three windings of electro-conductive wire, arranged orthogonally and wound around the magnetic core.

3. The device of claim 1 or 2, wherein the at least one low frequency magnetic inductor of the transmitter unit (103) comprises an elongated magnetic core and a coil wound around the elongated magnetic core.

4. The device of claim 1 or 2, wherein the at least one low frequency magnetic inductor of the transmitter unit (103) comprises a square, rectangular or round coil of electro-conductive wire with a given number of turns.

5. The device of claim 1 or 2, wherein the transmitter unit (103) comprises two elongated, low frequency, orthogonal magnetic inductors with or without a magnetic core.

6. The device of any one of previous claims, wherein the detection mechanism (100) further comprises:
a first ultra-low noise and/or power signal amplifier module (102), operatively connected to the receiver sensor (101) and the processing unit (200), and configured to amplify a signal received by the low frequency magnetic inductor arranged in three axes; and
a second signal and/or power amplifier module (104), operatively connected to the transmitter unit (103) and the processing unit (200) and configured to amplify a signal emitted by the processing unit (200).

7. The device of claim 6, wherein the low frequency magnetic inductor/s of the transmitter unit (103) is/are configured to transmit the signal emitted by the processing unit (200) every certain configurable period of time, wherein said period of time is comprised in a range between 10-100 ms.

8. The device of previous claims, wherein the processing unit (200) further comprises an Analog-Digital converter (201), a calibration unit (202) and a multiplexor (204).

9. The device of any one of previous claims, wherein the warning mechanism (300) comprises a sound device and/or a vibrating device and/or a light device.

10. The device of any one of the previous claims, wherein the object comprises another safety distance device.

11. The device of any one of the previous claims, wherein the power source comprises at least one rechargeable battery (401).

12. The device of claim 8, wherein the processing unit further comprises a modulator/demodulator mechanism to emit said signal.

13. The device of any one of the previous claims 1 to 9, wherein the object comprises an energized equipment that requires security protection.

14. The device of any one of the previous claims, wherein the safety distance device (1) is integrated in a wrist-worn band/box, in a necklace or in a belt.

15. The device of claim 1, wherein the safety distance device (1) is integrated in a Smartphone and wherein the at least one low frequency magnetic inductor of the transmitter unit (103) is devoid of a magnetic core and is arranged around a periphery of said Smartphone.
